# FASCICULE DE BREVET EUROPEEN

(11) **EP 4 640 383 B1**
(45) Date de publication et mention de la délivrance du brevet: **28.01.2026**
(21) Numéro de dépôt: 25157908.2
(22) Date de dépôt: 14.02.2025
(51) Int. Cl.: B26B 13/00, A01G 3/06, B23P 15/40

(54) **ORGANE D'USINAGE OU DE SUPPORT POUR UN OUTIL PORTATIF POUR DES APPLICATIONS AGRICOLES, VITICOLES, ARBORICOLES OU D' ÉLEVAGE D' ANIMAUX DE RENTE**
BEARBEITUNGS- ODER STÜTZORGAN FÜR EIN HANDWERKZEUG FÜR LANDWIRTSCHAFTLICHE, LANDWIRTSCHAFTLICHE, OBST- ODER NUTZTIERANWENDUNGEN
MACHINING OR SUPPORTING MEMBER FOR A PORTABLE TOOL FOR AGRICULTURAL, VITICO, TREEING OR REARING ANIMAL BREEDING APPLICATIONS

(30) Priorité: 23.04.2024 CH 4462024; 23.04.2024 FR 2404204
(43) Date de publication de la demande: 29.10.2025
(73) Titulaire: Felco SA, 2206 Les Geneveys-sur-Coffrane (CH)
(72) Inventeur: Nabil, Francis, 2036 Cormondrèche (CH)
(74) Mandataire: P&TS SA (AG, Ltd.)

(56) Documents cités:
- WO-A1-02/072319
- FR-A1- 2 371 531
- FR-A1- 2 811 860
- US-B2- 10 836 028

## Description

### Domaine technique

La présente invention concerne un organe d'usinage ou de support pour un outil portatif pour des applications agricoles, viticoles, arboricoles ou d'élevage d'animaux de rente.

### Etat de la technique

Dans le contexte de la présente invention, l'expression « outil portatif » désigne un outil arrangé pour être porté par un utilisateur.

Pendant son utilisation, l'outil portatif est porté par un membre de l'utilisateur, par exemple par sa main. En particulier, le même membre qui porte un tel outil permet également de le commander, par exemple à l'aide d'une gâchette. Un outil portatif n'a pas une position stationnaire pendant son utilisation, car l'utilisateur le déplace, par exemple pour usiner un nouvel objet ou pour mieux usiner le même objet. En d'autres termes, un outil portatif n'est pas stationnaire, c'est-à-dire qu'il n'occupe pas toujours la même position.

Un sécateur, des élagueurs, des coupe-câbles, des cisailles à onglons pour animaux de rente tels que par exemple des moutons, des chèvres, etc. pour des applications agricoles, viticoles, arboricoles ou d'élevage d'animaux de rente sont des exemples non limitatifs d'outils portatifs selon l'invention.

Dans le contexte de la présente invention, un « outil électroportatif » est un cas spécifique d'outil portatif et désigne un outil portatif électrique ou alimenté électriquement. L'outil électroportatif peut être alimenté électriquement par une source d'alimentation autonome. La source d'alimentation d'un tel outil électroportatif peut être par exemple une batterie ou bien un pack de batteries. Dans un cas, la source est une pièce séparée de l'outil électroportatif. En particulier l'utilisateur peut porter avec une main l'outil et simultanément porter sur lui, par exemple à l'aide d'un sac-à-dos, d'un harnais ou d'une ceinture, la source d'alimentation. Dans un autre cas, la source d'alimentation d'un tel outil électroportatif est dans l'outil électroportatif.

Un outil électroportatif comprend un actionneur, par exemple un moteur, pour transmettre une force à un objet externe sur lequel l'outil agit.

Un sécateur électroportatif, des cisailles, des pinces, une tronçonneuse portative, une scie circulaire portative, une scie sauteuse portative, etc. pour des applications agricoles, viticoles, arboricoles ou d'élevage d'animaux de rente sont des exemples non limitatifs d'outils électroportatifs de coupe selon l'invention.

Un outil portatif ou électroportatif comprend un organe d'usinage d'un objet et éventuellement un organe de support pour cet objet. L'organe d'usinage permet d'usiner un objet et entre en contact direct avec cet objet. Il est mobile pendant l'usinage de l'objet et actionné par l'utilisateur (dans le cas d'un outil portatif) ou par un actionneur (dans le cas d'un outil électroportatif).

Dans le contexte de la présente invention, le mot « usiner » indique toute opération effectuée sur l'objet qui permet de le transformer, par exemple de le couper, presser, trancher, raboter etc.

L'organe de support supporte l'objet pendant son usinage et il est fixe par rapport à l'objet pendant l'usinage de l'objet. L'organe de support n'est pas actionné par l'utilisateur de l'outil portatif manuel ni par l'actionneur de l'outil électroportatif. Sa présence est nécessaire pour réaliser cet usinage. L'organe de support est également en contact direct avec cet objet pendant son usinage.

Dans le cas où l'outil est un sécateur ou un sécateur électroportatif, sa lame mobile est l'organe d'usinage, car elle permet de couper un objet tel qu'une branche, et la contre-lame est l'organe de support, car elle supporte la branche pendant sa coupe.

Dans le cas où l'outil est une scie circulaire, sa lame rotative est l'organe d'usinage, car elle permet de couper un objet tel qu'une pièce en bois, et le plateau comprenant le passage pour la lame et sur lequel l'objet s'appuie pendant la coupe est l'organe de support.

Dans le cas où l'outil est un rabot, sa lame est l'organe d'usinage, car elle permet de couper un objet tel qu'une pièce en bois, et le plateau sur lequel l'objet s'appuie pendant la coupe est l'organe de support.

Dans le cas où l'outil est une tronçonneuse portative, sa chaine rotative est l'organe d'usinage, car elle permet de couper un objet, et le guide chaîne de la tronçonneuse portative autour duquel la chaine rotative se déplace est l'organe de support.

L'organe d'usinage et celui de support sont en général réalisé en métal, par exemple en acier, notamment en acier trempé.

Parfois, l'organe d'usinage et celui de support présentent un revêtement antiadhésif réduisant l'adhérence de la sève et/ou la friction, ce qui réduit par exemple l'effort nécessaire pour couper des branches. Certains revêtements permettent aussi une certaine résistance à la corrosion, aux rayures et à l'abrasion.

Dans le domaine du béton ou chirurgical, des outils des coupe connus présentent un revêtement en or. Le document JP2002200522 décrit par exemple une lame de scie à béton revêtue d'une couche (dont Au, Ag, ou alliages) d'épaisseur entre 100 µm à 1 mm. Le document US5569257 décrit par exemple une lame de scie chirurgicale revêtue d'une couche de matériau précieux dont l'or.

Le document WO02072319 décrit un sécateur avec lame métallique.

### Bref résumé de l'invention

Un but de la présente invention est de proposer un organe d'usinage ou de support pour un outil portatif pour des applications agricoles, viticoles, arboricoles ou d'élevage d'animaux de rente, qui soit alternatif aux organes connus.

Selon l'invention, ces buts sont atteints notamment au moyen de l'organe d'usinage ou de support pour un outil portatif pour des applications agricoles, viticoles, arboricoles ou d'élevage d'animaux de rente selon la revendication 1, des modes de réalisation préférentiels étant donnés dans les revendications dépendantes.

L'organe d'usinage ou de support pour un outil portatif pour des applications agricoles, viticoles, arboricoles ou d'élevage d'animaux de rente selon l'invention est réalisé au moins en partie en métal, et est arrangé pour être déplacé afin de réaliser un usinage. Selon l'invention, au moins une portion de l'organe d'usinage ou de support comprend un revêtement en alliage or-cobalt.

L'utilisation du revêtement en alliage or-cobalt pour un organe d'usinage ou de support pour un outil portatif pour des applications agricoles, viticoles, arboricoles ou d'élevage d'animaux de rente est surprenante, car il n'est pas attendu d'utiliser un alliage comprenant un métal précieux comme l'or pour de tels outils pour telles applications.

Parmi tous les revêtements connus, la demanderesse a sélectionné un type de revêtement spécifique, connu en horlogerie, notamment comme traitement décoratif permettant de donner à un composant horloger un dorage spécifique, mais pas pour des organes d'usinage ou de support pour outils portatifs.

Ce type de de revêtement spécifique était connu pour améliorer l'aspect esthétique d'un composant horloger. Cependant, l'aspect esthétique n'est pas important pour des organes d'usinage ou de support pour outils portatifs. Donc la demanderesse n'avait aucune incitation pour essayer ce type de revêtement connu.

De plus, les organes d'usinage ou de support ont des dimensions grandes par rapport aux composants horlogers présentant un tel revêtement. Encore une fois la demanderesse n'avait aucune incitation pour essayer ce type de revêtement connu.

Ce type de revêtement, connu en horlogerie pour son aspect visuel décoratif, présente contre toute atteinte des nombreux avantages pour des organes d'usinage ou de support pour outils portatifs. En effet, il permet d'obtenir des bonnes propriétés tribologiques, notamment un effort réduit à la friction et une bonne anti-corrosion.

De plus ce revêtement a une bonne accroche sur le métal : l'usure du revêtement est ainsi réduite par rapport à d'autres revêtements.

De plus, le nettoyage des organes d'usinage ou de support pour outils portatifs selon l'invention est facilité.

Enfin, les organes d'usinage ou de support pour outils portatifs selon l'invention sont également biocompatibles, ce qui les rend particulièrement adaptés pour des applications d'élevage, par exemple pour des lames pour des cisailles à onglons pour moutons ou chèvres, par exemple.

Dans un mode de réalisation, le pourcentage massique de l'or étant égal à au moins 99%, le reste de la matière comprenant du cobalt ou étant constitué de cobalt.

Dans un mode de réalisation préférentiel, le reste de la matière est constitué de cobalt et le pourcentage massique du cobalt est compris dans la plage 0,15% - 1%.

Dans un mode de réalisation, le pourcentage massique du cobalt est compris dans la plage 0,15% - 1% et le reste de la matière est constitué d'or.

Dans un mode de réalisation, l'épaisseur du revêtement est comprise dans la plage 0,1 µm - 20 µm.

Dans un mode de réalisation, la dureté du revêtement est comprise dans la plage 140 Vickers - 180 Vickers.

Dans un mode de réalisation, la densité du revêtement est comprise dans la plage 17 g/cm³ - 18 g/cm³.

Dans un mode de réalisation, l'organe d'usinage ou de support est une lame.

Dans un mode de réalisation, la portion qui comprend le revêtement en alliage or-cobalt comprend un biseau de la lame et/ou un chanfrein de la lame.

L'invention concerne aussi un outil portatif pour des applications agricoles, viticoles, arboricoles ou d'élevage d'animaux de rente comprenant l'organe d'usinage et/ou de support selon l'invention.

Dans un mode de réalisation, l'outil portatif pour des applications agricoles, viticoles, arboricoles ou d'élevage d'animaux de rente est un sécateur ou des cisailles à onglons.

Dans un mode de réalisation, l'outil portatif pour des applications agricoles, viticoles, arboricoles ou d'élevage d'animaux de rente est un outil électroportatif, par exemple un sécateur électroportatif.

### Brève description des figures

Des exemples de mise en œuvre de l'invention sont indiqués dans la description illustrée par les figures annexées dans lesquelles :
La figure 1 illustre une première vue latérale d'un mode de réalisation d'un organe d'usinage et d'un organe de support, qui forment une tête de coupe en position fermée.
La figure 2 illustre une première vue latérale de la tête de coupe de la figure 1, en position ouverte.
La figure 3 illustre une deuxième vue latérale de la tête de coupe de la figure 1, en position ouverte.

### Exemple(s) de mode(s) de réalisation de l'invention

Dans la description suivante fournie à titre d'exemple, on fera référence, par simplicité, à des lames d'un sécateur, notamment d'un sécateur électroportatif. L'invention cependant n'est pas limitée à un tel instrument.

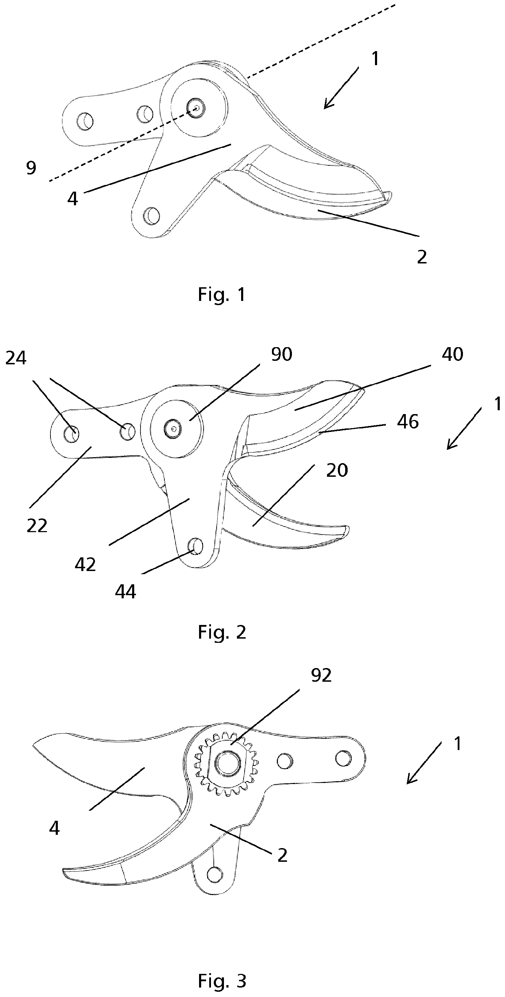

La figure 1 illustre une première vue latérale d'un mode de réalisation d'une tête de coupe 1 de l'outil électroportatif pour des applications agricoles, viticoles, arboricoles ou d'élevage d'animaux de rente selon l'invention, en position fermée. La figure 2 illustre une première vue latérale de la tête de coupe 1, en position ouverte. La figure 3 illustre une deuxième vue latérale de la tête de coupe 1, en position ouverte. Les figures 1 à 3 illustrent un mode de réalisation non limitatif de l'invention.

Comme visible sur les figures 1 à 3, la lame mobile 4 et la contre-lame 2 sont superposées l'une sur l'autre et connectées par des moyens de connexion, dans l'exemple un boulon 90 qui coopère avec une douille (non illustrée), et un écrou denté 92. Ces moyens de connexion sont connus et ne seront pas décrits en détail ici. La lame mobile 4 est arrangée pour pivoter par rapport à la contre-lame 2 autour de l'axe de rotation 9, qui traverse ces moyens de connexion.

La lame mobile 4 comprend une portion coupante ou chanfrein 40 et une portion d'actionnement 42, les deux portions s'étendant depuis les moyens de connexion 90, 92.

Dans l'exemple des figures 1 à 3, la portion d'actionnement 42 de la lame mobile 4 comprend un moyen de liaison avec la transmission du sécateur électroportatif, un trou 44 dans l'exemple illustré. La transmission, via ce moyen, pousse la portion d'actionnement 42, en causant ainsi la rotation de la lame mobile 4 autour de l'axe de rotation 9. Lors de cette rotation, la partie coupante 40 peut s'éloigner de la contre-lame 2 (figures 2 et 3), en permettant ainsi à l'utilisateur d'insérer un objet à couper dans l'espace qui se crée entre la partie coupante 40 et la contre-lame 2, et ensuite peut s'approcher à la contre-lame 2 (figure 1), en réalisant ainsi la coupe de l'objet. La partie coupante 40 de la lame mobile 4 comprend en effet un biseau (ou bord aiguisé) 46, qui permet cette coupe.

La partie coupante 40 de la lame mobile des figures 1 à 3 a une forme de bec, légèrement courbée. Cependant d'autres formes peuvent être envisagées. L'extrémité libre de la partie coupante 40 dans le plan d'une surface latérale de la lame mobile 4 a une largeur plus grande par rapport à la largeur de la partie coupante en correspondance des moyens de connexion 90, 92. En d'autres mots, la partie coupante 40 a une section dans le plan d'une surface latérale de la lame mobile 4 sensiblement triangulaire.

Bien que dans les exemples des figures 1 à 3 la lame-mobile ne soit pas plate, dans d'autres exemples (non illustrés) elle peut être plate.

La lame mobile 4 est réalisée au moins en partie, et souvent complétement, dans un matériau conducteur électrique, par exemple et de façon non limitative en acier ou en acier trempé.

La contre-lame 2 comprend une portion de support 20 et une portion de fixation 22, les deux portions s'étendant depuis les moyens de connexion 90, 92. La portion de support 20 permet de supporter un objet à couper pendant la coupe et entre au moins en partie en contact direct avec cet objet.

La portion de fixation 22 permet de fixer la contre-lame 2 au corps du sécateur électroportatif, afin de rendre solidaire le corps à la contre-lame 2.

Dans l'exemple des figures 1 à 3, la portion de fixation 22 de la contre-lame 2 comprend des moyens de fixation de la contre-lame 2 avec le corps du sécateur électroportatif, deux trous 24 dans l'exemple illustré.

Bien que dans les exemples des figures 1 à 3 la contre-lame 2 n'est pas plate, dans d'autres exemples elle peut être plate.

Selon l'invention, au moins une portion la lame 4 ou la contre-lame 2 comprend un revêtement en alliage or-cobalt.

Ce type de revêtement, connu en horlogerie pour son aspect visuel décoratif, présente contre toute atteinte des nombreux avantages pour une lame ou une contre-lame. En effet, il permet d'obtenir des bonnes propriétés tribologiques, notamment un effort réduit à la friction et une bonne anti-corrosion.

De plus, le nettoyage de la lame ou de la contre-lame pour outils portatifs selon l'invention est facilité.

Enfin, la lame ou de la contre-lame est également biocompatible, ce qui les rend particulièrement adaptés pour des applications d'élevage, par exemple pour des lames pour des cisailles à onglons pour moutons ou chèvres, par exemple.

Dans un mode de réalisation, la portion qui comprend le revêtement en alliage or-cobalt comprend le biseau 46 de la lame 4 et/ou la portion coupante 40 de la lame 4.

Dans un mode de réalisation, toute la lame 4 comprend le revêtement selon l'invention. En effet, dans un mode de réalisation, le plus simple est de revêtir la lame entièrement.

Il est aussi possible de revêtir la contre-lame 2, par exemple entièrement. Cela permet d'avoir une tête de coupe 1 entièrement dorée.

Dans un mode de réalisation, le revêtement est déposé de façon électrochimique, mais il est également possible de le déposer par PVD (Physical Vapour Deposition).

Dans un mode de réalisation, le pourcentage massique de l'or étant égal à au moins 99%, le reste de la matière comprenant du cobalt ou étant constitué de cobalt.

Dans un mode de réalisation, le pourcentage massique du cobalt est compris dans la plage 0,15% - 1%.

Dans un mode de réalisation, le pourcentage massique du cobalt est compris dans la plage 0,15% - 1% et le reste de la matière est constitué d'or.

Dans un mode de réalisation, l'épaisseur du revêtement est comprise dans la plage 0,1 µm - 20 µm.

Dans un mode de réalisation, la dureté du revêtement est comprise dans la plage 140 Vickers - 180 Vickers.

Dans un mode de réalisation, la densité du revêtement est comprise dans la plage 17 g/cm³ - 18 g/cm³.

### Numéros de référence employés sur les figures

- 1: Tête de coupe
- 2: Contre-lame
- 4: Lame mobile
- 9: Axe de pivotement
- 20: Portion de support de la contre-lame 2
- 22: Portion de fixation de la contre-lame 2
- 24: Trou de connexion avec le corps
- 25: Surface de support de la contre-lame 2
- 40: Portion coupante de la lame mobile 4
- 42: Portion d'actionnement de la lame mobile 4
- 44: Trou de connexion avec la transmission
- 46: Bord aiguisé de la lame mobile 4
- 90: Boulon
- 92: Ecrou denté

## Revendications

1. Organe d'usinage (4) ou de support (2) pour un outil portatif pour des applications agricoles, viticoles, arboricoles ou d'élevage d'animaux de rente, ledit organe étant réalisé au moins en partie en métal, et étant arrangé pour être déplacé afin de réaliser un usinage,
**caractérisé en ce qu'**
au moins une portion de l'organe d'usinage (4) ou de support (2) comprend un revêtement en alliage or-cobalt.

2. Organe d'usinage (4) ou de support (2) selon la revendication 1, dans quel le pourcentage massique de l'or est égal à au moins 99%, le reste de la matière comprenant du cobalt ou étant constitué de cobalt.

3. Organe d'usinage (4) ou de support (2) selon l'une des revendications 1 ou 2, dans lequel le pourcentage massique du cobalt est compris dans la plage 0,15% - 1 %.

4. Organe d'usinage (4) ou de support (2) selon l'une des revendications 1 à 3, dans lequel l'épaisseur du revêtement est comprise dans la plage 0,1 µm - 20 µm.

5. Organe d'usinage (4) ou de support (2) selon l'une des revendications 1 à 4, dans lequel la dureté du revêtement comprise dans la plage 140 Vickers - 180 Vickers.

6. Organe d'usinage (4) ou de support (2) selon l'une des revendications 1 à 5, dans lequel la densité du revêtement entre 17 g/cm³ et 18 g/cm³.

7. Organe d'usinage (4) ou de support (2) selon l'une des revendications 1 à 6, étant une lame respectivement une contre-lame.

8. Organe d'usinage (4) ou de support (2) selon la revendication 7, dans lequel la portion qui comprend le revêtement en alliage or-cobalt comprend un biseau (46) de la lame (4) et/ou la portion coupante (40) de la lame (4).

9. Outil portatif pour des applications agricoles, viticoles, arboricoles ou d'élevage d'animaux de rente comprenant l'organe d'usinage (4) et/ou de support (2) selon l'une des revendications 1 à 8.

10. Outil portatif pour des applications agricoles, viticoles, arboricoles ou d'élevage d'animaux de rente selon la revendication 9, étant un sécateur ou des cisailles à onglons.

11. Outil portatif pour des applications agricoles, viticoles, arboricoles ou d'élevage d'animaux de rente selon la revendication 9, étant un outil électroportatif, par exemple un sécateur électroportatif.

## Patentansprüche

1. Bearbeitungselement (4) oder Stützelement (2) für ein tragbares Werkzeug für Anwendungen in der Landwirtschaft, im Weinbau, in der Baumpflege oder in der Nutztierzucht, wobei das besagte Element zumindest teilweise aus Metall besteht und derart angeordnet ist, um zur Durchführung der Bearbeitung bewegt zu werden, **dadurch gekennzeichnet, dass** zumindest ein Teil des Bearbeitungselements (4) oder des Stützelements (2) eine Gold-Kobalt-Legierungsbeschichtung umfasst.

2. Bearbeitungselement (4) oder Stützelement (2) gemäss Anspruch 1, worin der Massenanteil an Gold mindestens 99 % beträgt und der Rest des Materials Kobalt enthält oder aus Kobalt besteht.

3. Bearbeitungselement (4) oder Stützelement (2) gemäss einem der Ansprüche 1 oder 2, worin der Massenanteil an Kobalt im Bereich von 0,15% bis 1% liegt.

4. Bearbeitungselement (4) oder Stützelement (2) gemäss einem der Ansprüche 1 bis 3, worin die Schichtdicke im Bereich von 0,1 µm bis 20 µm liegt.

5. Bearbeitungselement (4) oder Stützelement (2) gemäss einem der Ansprüche 1 bis 4, worin die Härte der Beschichtung im Bereich von 140 Vickers bis 180 Vickers liegt.

6. Bearbeitungselement (4) oder Stützelement (2) gemäss einem der Ansprüche 1 bis 5, worin die Beschichtungsdichte zwischen 17 g/cm³ und 18 g/cm³ liegt.

7. Bearbeitungselement (4) oder Stützelement (2) gemäss einem der Ansprüche 1 bis 6, wobei es sich um eine Klinge bzw. eine Gegenklinge handelt.

8. Bearbeitungselement (4) oder Stützelement (2) gemäss Anspruch 7, worin der Abschnitt, welcher die Gold-Kobalt-Legierungsbeschichtung umfasst, eine Fase (46) der Klinge (4) und/oder den Schneidabschnitt (40) der Klinge (4) umfasst.

9. Tragbares Werkzeug für Anwendungen in der Landwirtschaft, im Weinbau, in der Baumpflege oder in der Nutztierzucht, mit dem Bearbeitungselement (4) und/oder dem Stützelement (2) gemäss einem der Ansprüche 1 bis 8.

10. Tragbares Werkzeug für Anwendungen in der Landwirtschaft, im Weinbau, in der Baumpflege oder in der Nutztierzucht gemäss Anspruch 9, nämlich eine Gartenschere oder Hufschere.

11. Tragbares Werkzeug für Anwendungen in der Landwirtschaft, im Weinbau, in der Baumpflege oder in der Nutztierzucht gemäss Anspruch 9, nämlich ein Elektrowerkzeug, zum Beispiel eine motorbetriebene Gartenschere.

## Claims

1. A machining or supporting member (4) or (2) for a portable tool for agricultural, viticulture, treeing or rearing animal breeding applications, said member being made at least partly of metal and being arranged to be moved in order to perform machining,
**characterised in that**
at least a portion of the machining member (4) or supporting member (2) comprises a gold-cobalt alloy coating.

2. Machining or support member (4) or (2) according to claim 1, in which the mass percentage of gold is at least 99%, the rest of the material comprising cobalt or being constituted by cobalt.

3. Machining element (4) or supporting element (2) according to one of claims 1 or 2, wherein the mass percentage of cobalt is in the range of 0.15% to 1%.

4. Machining element (4) or supporting element (2) according to one of claims 1 to 3, wherein the thickness of the coating is in the range of 0.1 µm to 20 µm.

5. Machining member (4) or support member (2) according to any one of claims 1 to 4, wherein the hardness of the coating is in the range of 140 Vickers to 180 Vickers.

6. Machining element (4) or supporting element (2) according to any one of claims 1 to 5, wherein the density of the coating is in the range of 17 g/cm³ to 18 g/cm³.

7. Machining member (4) or supporting member (2) according to any one of claims 1 to 6, being a blade respectively a counter blade.

8. Machining or supporting member (4) or (2) according to claim **7,**
wherein the portion comprising the gold-cobalt alloy coating comprises a bevel (46) of the blade (4) and/or the cutting portion (40) of the blade (4).

9. Portable tool for agricultural, viticulture, treeing or rearing animal breeding applications comprising the machining member (4) and/or supporting member (2) according to any one of claims 1 to 8.

10. Portable tool for agricultural, viticulture, treeing or rearing animal breeding applications according to claim 9, being pruning shears or hoof shears.

11. Portable tool for agricultural, viticulture, treeing or rearing animal breeding applications according to claim 9, being a power tool, for example power pruning shears.
